(19)

Europäisches Patentamt
European Patent Office
Office européen des brevets

(11)     **EP 2 433 508 B1**

(12)     **EUROPEAN PATENT SPECIFICATION**

(45) Date of publication and mention
     of the grant of the patent:
     **13.03.2013  Bulletin 2013/11**

(51) Int Cl.:
     *A23N 1/00* *(2006.01)*          *B30B 9/02* *(2006.01)*
     *B30B 9/12* *(2006.01)*          *C12G 1/00* *(2006.01)*
     *C12G 1/02* *(2006.01)*          *B30B 9/04* *(2006.01)*
     *B30B 9/22* *(2006.01)*

(21) Application number: **11007799.7**

(22) Date of filing: **26.09.2011**

(54) **Extraction and separation method of the must**

   Verfahren zum Entsaften und Trennen von Maische

   Procédé pour l'extraction et la séparation du moût

(84) Designated Contracting States:
     **AL AT BE BG CH CY CZ DE DK EE ES FI FR GB
     GR HR HU IE IS IT LI LT LU LV MC MK MT NL NO
     PL PT RO RS SE SI SK SM TR**

(30) Priority: **28.09.2010  IT UD20100176**

(43) Date of publication of application:
     **28.03.2012  Bulletin 2012/13**

(73) Proprietor: **Butussi, Filippo
     33040 Corno di Rosazzo (UD) (IT)**

(72) Inventor: **Butussi, Filippo
     33040 Corno di Rosazzo (UD) (IT)**

(74) Representative: **D'Agostini, Giovanni
     D'AGOSTINI ORGANIZZAZIONE SRL,
     Via G. Giusti 17
     33100 Udine (IT)**

(56) References cited:
     **DE-A1- 19 924 475     US-A- 4 253 390**

     • **DATABASE BIOSIS [Online] BIOSCIENCES
       INFORMATION SERVICE, PHILADELPHIA, PA,
       US; June 2010 (2010-06), PATEL PARIMAL ET AL:
       "Influence of Juice Pressing Conditions on
       Polyphenols, Antioxidants, and Varietal Aroma of
       Sauvignon blanc Microferments", XP002635490,
       Database accession no. PREV201000406977 &
       JOURNAL OF AGRICULTURAL AND FOOD
       CHEMISTRY, vol. 58, no. 12, June 2010 (2010-06),
       pages 7280-7288, ISSN: 0021-8561, DOI: DOI:
       10.1021/JF100200E**

## Description

Technical field

The present invention relates to an extraction and separation method of the must according to the characteristics of the pre-characterizing part of claim 1. The present invention also relates to a pressing machine (23) for the pressing of agricultural products according to the characteristics of the pre-characterizing part of claim 10.

Prior art

On pressing the grapes to obtain the must it is necessary to consider that from this operation different types of must are obtained. In general from 100 kgs of grapes 50-65 % of flower must, 12- 28 % of crushing must are obtained, the remaining part being made of residual solid parts as marc and rasp.

Mainly for the high quality wines and in particular for the white wines it is essential that the flower must is carefully apart from the crushing must. At present this selection is carried out manually by an operator that carries out the phases providing the start of the press, withdrawals of must samples and execution of measurements on the samples. On the basis of the result of the measurements the deviation of the must in a different container intended for a different must typology occurs. In some cases, mainly when we are in proximity of the working area in which the crushing must exit is expected, someone even stops the press on waiting the result of the analysis. This sequence of operations is repeated with a certain frequency for all the pressing operation.

According to the applicant's knowledge the problem is very common among the wine growers.

At present the off line analysis that is carried out to distinguish between flower must and crushing must can be based upon different methods, but in any case it is necessary to underline that it always occurs off line on a sample of must taken by the machine. The distinction between flower must and crushing must is made by determining the catechins, or total polyphenols, by means of a spectrophotometer. In fact these substances should be avoided in the flower must because they damage the aromatic structure and the elegance of the white wines. Other techniques to identify the crushing must can provide measuring equipment comprising kits of throwaway reagents to be added to quantities of must selected by means of fixed setting pipettes. Again alternatively or in combination with the previous methods the pH of the must is valued by means of pH-metres first providing a setting by means of buffer solutions and successively measuring the pH of a must sample.

US4253390 describes a system for extracting liquids from fruit, vegetables, or other similar materials which provides a destemmer for receiving picked grapes and for removing stems and leaves therefrom. The destemmer partially crushes the grapes during the destemming operation producing free run juice in the resulting grape must. The must is transferred to a predrainer screw press which separates and collects the free run juice and a preselected portion of the residual juice by means of a gentle pressing action augmented by centrifugal force. The partially dewatered must is then transferred to one or more final screw presses which apply heavy compression to extract the remainder of usable juice from the predrained must.

DE19924475 describes a method for determining the sugar content of a supply of grapes for must production which involves the phases of extracting a must sample and determining the sugar content of this sample, extracting a grape sample from the vessel, pressing must from the grapes and determining the sugar content of this sample, determining the correct sugar content of the overall supply on the basis of the measurements.

In Journal of Agricultural and Food Chemistry, 2010 Jun 23, reference 58(12): 7280-8, in the article entitled "Influence of juice pressing conditions on polyphenols, antioxidants, and varietal aroma of Sauvignon blanc microferments", Patel P, Herbst-Johnstone M, Lee SA, Gardner RC, Weaver R, Nicolau L, Kilmartin PA., the impact of juice press fractions upon the content of varietal thiols in Sauvignon blanc has been examined for wines fermented at the laboratory scale.

Problems of the prior art

The carrying out of the pressing operations of the grapes according to the prior art with the withdrawal of samples and the executing of the analyses involves a considerable time waste. Moreover it involves the missing of an operator for almost the whole time of the extraction of the must. An operator is in practice always engaged in executing the analyses of the must. Also the pressing times can be subject to lengthening because it is of fundamental importance determining when the passage from flower must to pressing must occurs and the pressing operation can be slowed down to allow the executing of the analyses. In some cases it can even be stopped. This involves additional costs and spoor efficiency of the equipment exploitation.

Moreover, many small companies do not have the possibility to make these analyses, both due to the cost of the equipment and to the need to engage continuously an operator to carry out the analyses during the pressing. However even for larger companies, the continuative engagement of an operator is burdensome, also considering that increasing the size of the company also the produced volumes, the necessary equipment increase and in some cases an operator is however insufficient, so much as to make necessary the presence of an operator for each single pressing machine, with high costs, given the necessary specializing level.

Moreover the analyses nowadays carried out for determining this passage require expensive equipment, as a spectrophotometer, that is not always available and that can also require high cost maintenance. Moreover the analyses must be carried out by highly qualified personnel able to use such equipment.

The resort to complex analyses can however have repercussions on the final quality of the wine because the pressing operation should however happen fastly to limit the contact with the oxygen. Also delaying the pressing of the collected grapes because the press is engaged in a long pressing operation that provides repeated and continual laboratory analyses to identify the moment in which the flower must from the crushing must should be separated can involve a qualitative decay because the grapes on waiting for the pressing are however subjected to exposure to oxygen with also possibility of starting undesired fermenting processes.

Moreover a measuring carried out in a discreet way in any case involves the risk that the moment in which occurs the exit of the crushing must may for example happen shortly after a measuring with the risk that part of the crushing must is in any case mixed with the flower must. To solve this problem it would be necessary to increase the frequency of the measurements with the consequence of further lengthening the processing times and requiring even a greater use of resources.

About the measuring equipments comprising kits of throwaway reagents to be added to quantities of must selected by means of fixed setting pipettes, though reducing the analysis times, they involve however a slowdown of the pressing process and however do not allow the careful identification of the moment in which the starting of the crushing must production occurs. Moreover, such techniques have the disadvantage of being linked to subjective evaluations and the uncertainty of a certain result of the measuring can involve a premature separation of the must to avoid that the crushing must ends up in the container of the flower must. This has the consequence that part of the flower must is sent to the container of the crushing must, with consequent reduction of the efficiency of the pressing process.

Also the solutions providing the evaluation of the pH of the must by pH- metre involve the slowdown of the pressing and often require frequent settings of the instrument with buffer solutions having a pH different from one another. So in any case it is not allowed the accurate identification of the moment in which the starting of the production of the crushing must occurs.

Aim of the invention

The aim of this invention is to supply an extraction and separation method of the must between flower must and crushing must that allows to avoid or remarkably reducing the costs of the analysis operations ensuring an improved reliability of the measuring and identification of the passage from flower must to crushing must. Further aim of the present invention is that of avoiding the time spending by an operator that nowadays must remain steady on the machine to carry out samplings and analyses.

One more aim of the present invention is to allow a more effective adjustment of the operating phases of the pressing machine, operational pressures and of the times of the pressing phases.

Further aim of the present invention is to supply an improved pressing machine. Concept of the invention

The aim is reached with the characteristics of the main claim. The sub-claims represent advantageous solutions.

Advantageous effects of the invention

The solution in accordance with the present invention, by the considerable creative contribution whose effect constitutes an immediate and not-negligible technical progress, presents many advantages. First of all the solution according to the present invention answers to the need felt for a long time by the wine-growers to obtain a reliable and fast system for determining the moment in which the passage from flower must to crushing must occurs. The solution according to the present invention allows to carry out the evaluation of the passage from flower must to crushing must in an automatic way without stopping the pressing operation.

This in turn involves innumerable advantages because there is no risk that the passage from flower must to crushing must occurs in the means between two following measurements on two different samples with the consequence that however at least one part of the crushing must is mixed with the flower must.

Moreover there is a considerable reduction of the time of the pressing cycle as it is no more necessary to carry out continuous slowdowns or stops of the press to carry out continual samplings, analyses, evaluations, with very short time intervals until obtaining the division of the crushing products.

This in turn involves qualitative advantages on the must obtained because it is less concerned with useless waiting times, possible oxidations, contaminations with possible chemical compounds present on the peels, etc.

Moreover, by reducing the times and the working hours of each single pressing also the waiting times of the grapes that must be successively inserted in the press are reduced, with consequent qualitative benefits on the must extracted from them because all the phenomena of beginning of maceration, exposure to oxidations, etc. are delayed.

Further advantages regard the fact that the presence of an operator working full-time on the pressing machine to carry out the analyses is not anymore required, the operator at the same time being able to make other operations, with consequent cost reduction. In similar way for larger companies using more presses simultaneously, only one operator will be sufficient to follow the functioning of many more presses. In both cases most reliable results and a most efficient identification of the moment of passage from the flower must to the crushing must will obtained.

Advantageously, moreover, the application of the method according to the present invention allows, also in the case in which the operator may not be used continuously to execute the withdrawal and analyses of the must, to carry out such checks continuously and independently on the operator's presence also in small companies that may not allocate an operator exclusively to such operations, with consequent qualitative and economic advantages, making such advantages available to all, both large and average and small companies.

Moreover with the method according to the present invention also the recourse to a less specialized operator can be sufficient, with consequent economic advantages. Also the cost of the apparatus used is lower with respect to those usually necessary for the laboratory analyses.

Moreover the method according to the present invention allows to obtain a better quality of the flower musts with consequent better quality of the wines, less wastes thanks to a better and more efficient identification of the passage from flower must to crushing must, reduction of discards of crushing product that could be erroneously directed towards the cistern of the crushing must.

Furthermore advantageously the pressing of the grapes can be carried out and controlled in an efficient and automatic way. The press, in practice, can be made ""smart" being able to understand when the extraction of the crushing must begins, effecting as a result the necessary corrections to the pressing process to avoid the etching of the peels, adapting the pressing process and the relative operative program according to the real condition of the grapes and of the extracted must.

Description of the drawings

It is in the following described a solution realizable with reference to the included drawings to be considered namely a non-limiting example of the present invention in which:

Fig. 1 represents schematically a first embodiment of the invention applied to a pressing plant of the grapes with accumulation plenum chamber.
Fig. 2 represents schematically a different embodiment of the invention applied to a pressing plant of the grapes with accumulation plenum chamber.
Fig. 3 represents schematically a further embodiment of the invention applied to a pressing plant of the grapes with accumulation plenum chamber.
Fig. 4 represents schematically a further embodiment of the invention applied to a pressing plant of the grapes with collecting basin.
Fig. 5 represents schematically a diagram showing a chart of the pH variation in the different working phases.
Fig. 6 represents schematically a diagram showing another chart of the pH variation in the different working phases.
Fig. 7 represents schematically a diagram showing a chart of the pH variation according to the extracted must litres.
Fig. 8 represents schematically a diagram showing a chart of the pH variation according to the extracted must litres in the case of two charges of grapes.
Fig. 9 represents schematically a diagram showing a chart of the pH variation according to the extracted must litres in the case of two charges of grapes.

Description of the invention

In the field of wine production a phase of fundamental importance consists in the pressing of the grape bunches to obtain the must. The pressing consists in the extraction of the must by pressure or depression of the grapes in such a way to obtain the juice that after fermentation will successively become wine.

Notwithstanding this operation may seem of simple execution, as a matter of fact this should be carried out in a way that does not compromise the quality of the grapes and of their juice, operating, when required, opportune corrections and adjusting the same pressing process according to different parameters, e.g. the quality of the grapes, their maturation degree, the presence of grapes of the same type but coming from different vineyards, etc.

Mainly for quality wines the precautions to adopt in order to avoid and prevent the inevitable alterations are multiple. For example it is very important to avoid the contact with oxygen.

From the technical point of view, the must is the product that is obtained from the grapes through the mechanical processes of pressing, dejuicing and crushing.

The must is the liquid fraction of the squeezed grapes, namely the juice and it is made up of 70-80% of water, 10- 30% of sugars, predominantly fructose and glucose, mineral substances, proteinic and inorganic nitrogenous substances, polyphenols, tannins and colouring substances, acid substances, yeasts, vitamins. The acid substances are generally between the pH values 2,7 and 3,9, indispensable for a regular realization of the fermentation.

The operation of pressing of the grapes generally occurs by means of mechanical presses that allow to press large quantities of grapes in somewhat fast times. The rapidity and the intensity by which the pressing occurs are of fundamental importance and should be controlled in an appropriate way. According to the type of wine that one intends to produce, moreover, the must should be opportunely treated. In the case of white wine, one will proceed with the dejuicing, namely the immediate separation of the peels and of the grape-seeds in such a way to limit the yield of polyphenols.

Shortly after the pressing, due to the contact with the yeasts naturally present in the peels, or to the addition of selected yeasts, the must begins to oxidize and to ferment. The oxidizing should be avoided in any case.

The must is distinguished in must obtained from the first pressing, called "flower must", and must obtained from a more effective pressing, called "crushing must". In general from 100 kgs of grapes 50-65 % of flower must, 12- 28 % of crushing must are obtained, the remaining part being made up of residue solid parts as marc and rasp.

Mainly for the high quality wines and in particular for the white wines it is essential that the flower must is carefully kept apart from the crushing must. To comprise as the invention is applied in different contexts the main methods of extraction of the must are reported:

- Pressing without squeezing: by this method the highest quality wines are produced. The entire bunches are placed within a press that exerts a raising pressure on the grapes in such a way to make them blow out. In this way the juice originates directly from the centre of the grapes, and therefore is less contaminated by substances present in the same peel.
- Squeezing, dejuicing and pressing continuously: we are dealing with operations utilized by large wineries and for low-quality wines. The wine-press is placed over a dejuicer, where the separation of the juices from the solid part occurs.
- Pressing after the squeezing: the squeezed grapes are transferred in a press, from which the juice gutters during the filling of the same press. In successive stages then, other juice is obtained by effect of following pressings. The juices obtained with following pressings should be fractionated and separately wined in function of being either flower must or crushing must.

  In all kinds of processing it is necessary to carry out at least one separation of the juices, in some cases even more separations, for example of the initial juices, of the flower must and of the crushing must.

In particular during the pressing operation it is essential:

- Working at least initially at a low-pressure to avoid the extraction of juices from the peels and obtaining predominantly juices coming from the pulp of the grapes
- Synchronizing the formation of the juices and their down-flow acting on a pressure limiter on the basis of the evaluation of the flow.
- Fractionating the juices coming from the initial pressing with entire grapes, flower must of first pressing and crushing must from the end of the pressing.

As previously observed it is of fundamental importance to separate the various must typologies in order to obtain quality wines. The separation should occur necessarily during the same pressing.

The applicant has valued the use of an on line measuring of the pH during the pressing phase of the grapes to carry out a real time measuring of the pH of the must. As previously observed, the distinction between flower must and crushing must is made by determining the catechins, or total polyphenols, that are the substances that should be avoided in the flower must. The pH of the must is indirectly correlated with the extraction of these components. In fact when the release of catechins or polyphenols occurs, contextually also occurs the release of potassium, that is a substance contained in the same zones of the grapes, namely in the cells of the peels. The release of these substances occurs following the breakage of the zones in which they are contained. The applicant has thus put in relation the extraction of the catechins and polyphenols with the increase of pH caused by the corresponding extraction of potassium.

Many unsuccessful tests were performed to identify the instruments for measuring the pH that would adapt to this particular application because the pressures involved, the pressure changes and the presence of residues that are transported with the must in the pipings can easily damage the measuring equipment of the pH. Therefore the problems to be faced were multiple, among others also the adaptability to the machines usually utilized.

Besides this also problems were faced relative to the establishing of a methodology of data processing from the pH-metre to obtain a parameter that would allow a more precise identification of the moment in which the passage from the flower must to the crushing must occurs. Furthermore were faced also problems related to the fact that the pH of the must can change considerably on the basis of different factors, e.g. the quality of the grapes, their maturation degree, the presence of grapes of the same type but from different vineyards, etc.

It can be understood that providing for a measuring method able to give a reliable indication of the moment of the passage from the flower must to the crushing must in consideration of all the variables involved is not a simple and prompt matter and numerous tests and attempts to identify an optimal solution were required.

First of all it is necessary to notice that the value of the pH is linked to the nature and to the degree of dissociation of the present acids and to the their combinations with the bases. It constitutes the real acidity index, differently of the total acidity that represents the titratable acidity.

The pH difference that exists between the flower must and the crushing must derives in that the crushing must is richer in potassium, but also in catechins and polyphenols. Such substances may damage the aromatic structure and the freshness of the wine in the worst cases even bringing bitter sensations that deeply penalize the quality wines. The applicant, therefore, has tried to determine by means of a pH measuring some parameters to establish the moment of passage from flower must to crushing must.

It is necessary to specify that with "moment of passage" it is not intended a discreet well defined moment of time considering that the exit of crushing must for some grapes may occur in a moment in which the flower must is still exiting from other grapes. As a result the expression "moment of passage" should be somewhat intended as a time range within which occurs the passage from a condition in which the exiting must is essentially all flower must and a condition in which the exiting must is mainly and at the most all crushing must. However it will be evident that the aim of this invention is to identify in precise way this time range within which the produced must should be deviated from the duct that leads to the accumulation cistern of the flower must to the duct that leads to the accumulation cistern of the crushing must.

It is also necessary to specify that though in the enclosed figures reference will be made to an illustrative solution in which a horizontal press is schematically shown, the invention is also applied in the case of vertical presses, independently on the pressing methodology, possibly being, only for example, a screw press, a hydraulic press or a pneumatic press, a vacuum press. In general, therefore, the present invention is applicable to generic presses for pressing the grapes, able to press either in discontinuous way or in intermittent-semi continuous way.

For example the press can be a press for pressing the grapes of pneumatic type, with horizontal axis, which is equipped with a membrane (30) in which, after the charging of the container, the membrane (30) is set under pressure for the extraction of the must or a vacuum-operated press.

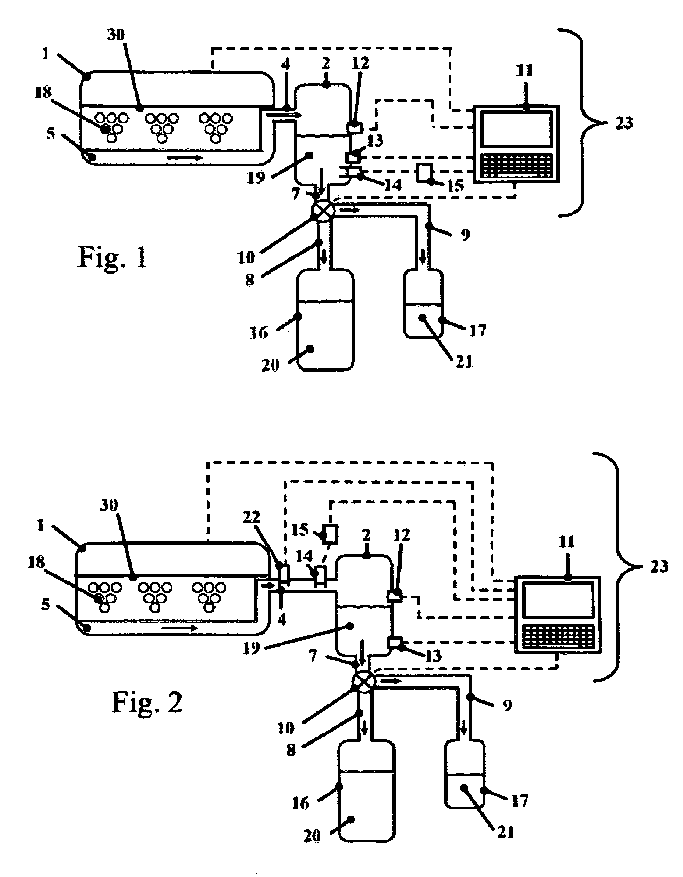

For example (Figs.1, 2, 3), a pressing machine (23) comprises at least one press (1) and a control device (11). The press (1) for pressing the grapes (18) for example can be a pneumatic type press with horizontal axis comprising an accumulation plenum chamber (2) inside of which the must (19) is conveyed which is picked by a collection channel (5) of the press (1) by means of a first duct (4) or feeding duct from the press. From the accumulation plenum chamber (2) starts a third duct (7) or feeding duct from the accumulation plenum chamber. The third duct (7) is connected in correspondence of the other end to a valve (10) from which extend a fourth duct (8) or feeding duct of the flower must and a fifth duct (9) or feeding duct of the crushing must. The fourth duct (8) ends in the cistern of the flower must (16) intended to contain the flower must (20). The fifth duct (9) ends in the cistern of the crushing must (17) intended to contain the crushing must (21). The valve (10) can be controlled to deviate the flow of must (19) alternatively towards the fourth duct (8) or towards the fifth duct (9) according to the fact that the flow of must (19) is identified as flower must (20) or crushing must (21) respectively. The flow of must is generated by means of a pump (not represented).

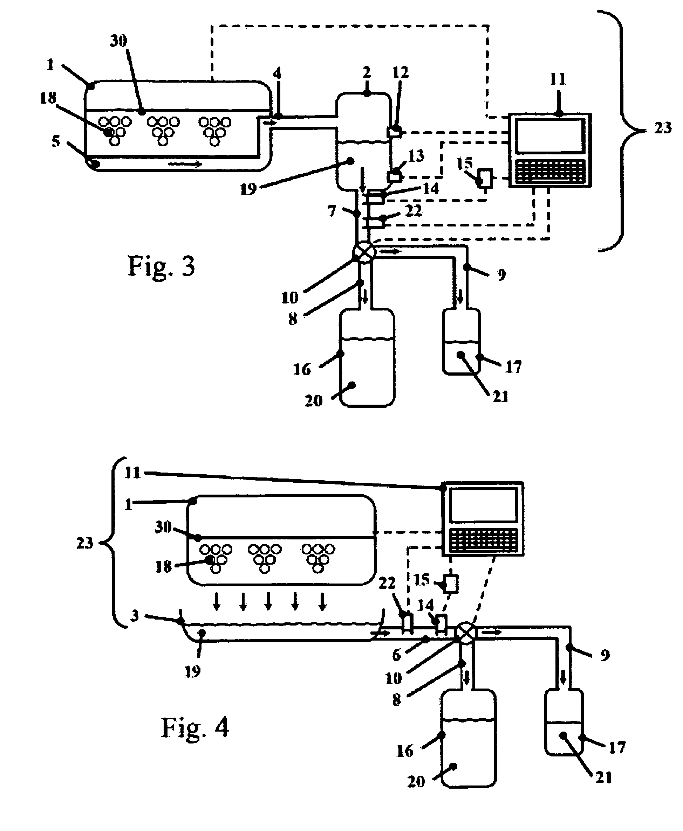

In a different embodiment (Fig.4), the pressing machine (23) always includes the press (1) and the control device (11), but the collection of the must occurs by means of a collecting basin (3). The must is therefore conveyed by means of a second duct (6) or feeding duct from the collecting basin. The second duct (6) is connected in correspondence of the other end to a valve (10) from which a fourth duct (8) or feeding duct of the flower must and a fifth duct (9) or feeding duct of the crushing must extend. The fourth duct (8) ends in the cistern of the flower must (16) intended to contain the flower must (20). The fifth duct (9) ends in the cistern of the crushing must (17) intended to contain the crushing must (21). The valve (10) can be controlled to deviate the flow of must (19) alternatively towards the fourth duct (8) or towards the fifth duct (9) according to the fact that the flow of must (19) is identified as flower must (20) or crushing must (21) respectively. The flow of must is generated by means of a pump (not represented).

An electronic control device (11) carries out measurements during the pressing process controlling the operation of the press (1). By means of the control device (11) it is possible also to set the different operating cycles of the press (1) and the operating pressures.

In the case (Figs. 1, 2, 3) of pressing machine (23) with accumulation plenum chamber (2), the control device (11), moreover, receives the signals from a level first sensor (12) and from a level second sensor (13) that measure respectively the highest and the lowest level of the must (19) present in the accumulation plenum chamber (2). In this way the operation of the press (1) and the flow of must across the third duct (7) are coordinated by the control device (11) in order to maintain the level of must (19) within the accumulation plenum chamber (2) always between a peak level measured by means of the level first sensor (12) and a minimum level measured by means of the level second sensor (13). This allows to collect the must (19) within a controlled atmosphere to prevent the oxidizing and also to adjust the flow of must (19) both towards the cistern of the flower must (16) and towards the cistern of the crushing must (17).

In a first embodiment of the invention (Fig. 1), a pH sensor means (14) was inserted within the accumulation plenum chamber (2) in a zone placed below the minimum level of the must (19) present in the same accumulation plenum chamber. In this way the pH-metre is always plunged in the must (19) present in the accumulation plenum chamber independently on the present level of must (19), that as previously considered is maintained between a minimum and a peak level by means of the control device (11). In the embodiment shown the pH sensor means (14) is connected to the control device (11) by means of a pH-metre (15), but it will be evident that in equivalent embodiments the control device (11) will be itself intended to directly receive the signal from the pH sensor means (14) without the help of the additional pH-metre (15).

It is necessary also to consider that the pH-metre (15) can be endowed with an exit for the direct control of the valve (10). This can allow to mount this device and apply the method according to the present invention also on older press models even lacking of control device (11) or that do not provide or do not allow the integration of the pH-metre (15).

In the preferred embodiment of the present invention the pH sensor means (14) is connected to the control device (11), which, on the basis of the readings received from it as well as on the basis of the readings received from other sensor means, adjusts the operation of the pressing machine in its complex and, as a result also the identification of the moment in which the production of the flower must stops and the production of the crushing must begins. Consequently the control device (11) operates the valve (10) to deviate the flow of must (19) alternatively towards the fourth duct (8) or towards the fifth duct (9) according to the fact that the flow of must (19) is identified as flower must (20) or as crushing must (21) respectively.

Alternatively it will be possible also to provide that the pH sensor means (14), if necessary by means of the pH-metre (15), controls autonomously the commutation of the valve (10) to deviate the flow of must (19) alternatively towards the fourth duct (8) or towards the fifth duct (9) according to the fact that the flow of must (19) is identified as flower must (20) or crushing must (21) respectively.

In a second embodiment of the invention (Fig. 2), a pH sensor means (14) was inserted within the first duct (4) together with a flow meter means (22) to obtain also a measure of the extracted must litres. Though in the first embodiment shown the flow meter means (22) has not been represented, it will be evident that it may be provided also in this embodiment.

In a third embodiment of the invention (Fig. 3), a pH sensor means (14) was inserted within the third duct (7) together with a flow meter means (22) to obtain also a measure of the extracted must litres.

In a fourth embodiment of the invention (Fig. 4), a pH sensor means (14) was inserted within the second duct (6) together with a flow meter means (22) to obtain also a measure of the extracted must litres.

It will be evident that the installation position of the flow meter means (22) can be selected independently on the installation position selected through the pH sensor means (14). For example the pH sensor means (14) can be installed within the accumulation plenum chamber (2) and the flow meter means (22) can be installed in the first duct (4).

During the tests carried out, the applicant has subdivided the pressing in a series of successive pressings at different pressures and of equal duration, each pressing at a certain pressure being able to be repeated for more operating cycles to increase its duration. In correspondence with each pressing the samplings have been carried out by the pH sensor means (14), but it will be evident that in the preferred embodiment of the invention the sampling of the pH value occurs with a frequency much greater than the commutation frequency from a following pressing.

In the following, in Table 1, a series of measures detected with the described method is reported. Some pressings A1, A2, A3, ..., Ai, ..., A6, were carried out each at the corresponding pressure Pi reported in the Table. For example the pressing A1 was maintained for four machine cycles, the pressing A2 was maintained for three machine cycles, the following pressings A3, ..., A6 were maintained each for different machine cycles. The pressing machine (23) available for the applicant is a (Fig. 1) pressing machine (23) with accumulation plenum chamber (2) which allows to set the pressing pressures of each phase. The machine works with negative pressures, namely in depression. In practice by setting in the pressing chamber of the pressing machine (23) a pressure lower than the environmental pressure a depression is generated that involves the squeezing of the grapes by means of a membrane (30). At greater depression values (namely at values of lower pressures, because negative) corresponds a greater squeezing of the grapes. It will be evident, however, that the reached results do not depend, if not fractionally, on the typology of machine used. Possible deviations from the measures carried out with respect to characteristics of the machine can be present according to the pressing method used by the machine, to the typology of pressing chamber, to the pressures involved, but without therefore exiting from the application domain of the present invention. It is necessary therefore to consider that when in the herein description greater pressure values of pressing are mentioned are meant pressure values that are higher as absolute value but that can, being negative, correspond in reality to settings of lower pressures of the machine. In similar way when in the present description are mentioned pressing lower pressure values are meant pressure values that are lower as absolute value but that can, being negative, correspond in reality to settings of higher pressures of the machine. Therefore, in general, the higher pressure must be intended as a pressure that involves a greater squeezing of the grapes present in the pressing machine (23) and vice-versa. The measures were carried out according to the first embodiment of the invention (Fig. 1), by the pH sensor means (14) placed within the accumulation plenum chamber (2) in a zone placed below the minimum level of the must (19) present in the same accumulation plenum chamber. The reported pH value corresponds to a pH mean value of the value detected in correspondence of the starting of each pressing phase. It will be evident, however, that analogous and equivalent results will be possibly reached also with other typologies of machines, e.g. those equipped with collecting basin (3).

Table 1

| Pressing phase | pH Value | Pressure |
|---|---|---|
| Pressing A1 | 3,10 | P1 = -0,2 bar |
| Pressing A1 | 3,12 | P2 = -0,2 bar |
| Pressing A1 | 3,14 | P3 = -0,2 bar |
| Pressing A2 | 3,16 | P4 = -0,4 bar |
| Pressing A2 | 3,17 | P5 = -0,4 bar |
| Pressing A3 | 3,22 | P6 = -0,6 bar |
| Pressing A3 | 3,32 | P7 = -0,6 bar |
| Pressing A4 | 3,35 | P8 = -0,7 bar |
| Pressing A5 | 3,34 | P9 = -0,8 bar |
| Pressing A6 | 3,35 | P10 = -0,9 bar |

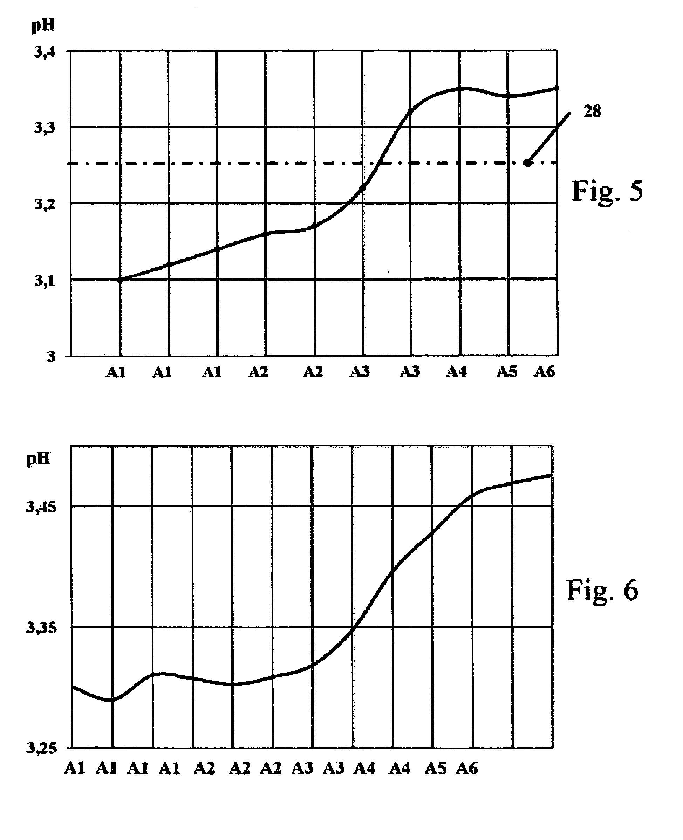

Correspondingly to the data of Table 1, the chart of the pH value has been plotted (Fig. 5) according to the pressing indexes.

In the following, in Table 2, a series of measures detected with the described method is reported. Following pressings A1, A2, A3, ..., Ai, ..., A6, each at the corresponding pressure Pi reported in table were carried out. The pressing A1 has been maintained for four machine cycles, the pressing A2 has been maintained for three machine cycles, the pressing A3 has been maintained for two machine cycles, the pressing A4 has been maintained for two machine cycles, the pressing A5 and the pressing A6 have been each maintained for one machine cycle. Further following pressings were also carried out at the higher pressure but the respective data were not reported because significant variations of the pH were not detected. The measures have been carried out according to the second embodiment of the invention (Fig. 2), with the pH sensor means (14) placed within the first duct (4). In this experimentation phase of the invention without yet inserting the flow meter means (22). The reported pH value corresponds to a mean pH value calculated in each pressing phase.

Table 2

| Pressing phase | pH Value | Pressure |
|---|---|---|
| Pressing A1 | 3,30 | P1 = -0,2 bar |
| Pressing A1 | 3,28 | P1 = -0,2 bar |
| Pressing A1 | 3,31 | P1 = -0,2 bar |
| Pressing A1 | 3,31 | P1 = -0,2 bar |
| Pressing A2 | 3,30 | P2 = -0,4 bar |
| Pressing A2 | 3,31 | P2 = -0,4 bar |
| Pressing A2 | 3,32 | P2 = -0,4 bar |
| Pressing A3 | 3,35 | P3 = -0,6 bar |
| Pressing A3 | 3,40 | P3 = -0,6 bar |
| Pressing A4 | 3,43 | P4 = -0,7 bar |
| Pressing A4 | 3,46 | P4 = -0,7 bar |

(continued)

| Pressing phase | pH Value | Pressure |
|----------------|----------|--------------|
| Pressing A5 | 3,47 | P5 = -0,8 bar |
| Pressing A6 | 3,48 | P6 = -0,9 bar |

Correspondingly to the data of Table 2, the chart of the pH value has been plotted (Fig. 6) according to the pressing indexes.

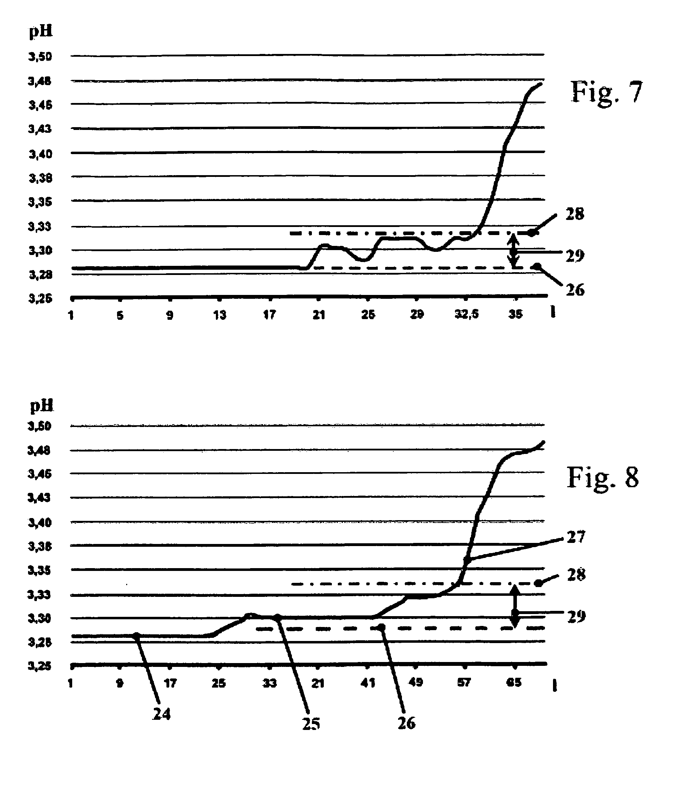

The applicant has successively valued a more effective embodiment of the method to select the must according to the present invention. Putting in relation the measured pH value with the value of litres actually extracted from the grapes a diagram (Fig. 7) is obtained in which the passage from the flower must to the crushing must is more easily identified. Also in this case following pressings A1 to P1 = -0,2 bar, A2 to P2 = -0,4 bar, A3 to P3 = -0,6 bar, A4 to P4 = -0,7 bar, A5 to P5 = -0,8 bar, A6 to P6 = -0,9 bar were carried out. The pressing A1 was maintained for four machine cycles, the pressing A2 was maintained for three machine cycles, the pressing A3 was maintained for two machine cycles, the pressing A4 was maintained for two machine cycles, the pressing A5 was maintained for two machine cycles and the pressing A6 was maintained for two machine cycles. Following further pressings at the greater pressure were also carried out but further significant pH variations were not detected. The measures were carried out according to the second embodiment of the invention (Fig. 3), with the pH sensor means (14) within the third duct (7) together with a flow meter (22) to obtain also a measure of the extracted must litres.

As it can be seen from the charts (Figs. 5, 6) already by a pH direct measuring the pressing phase in which the passage from the flower must to the crushing must occurs can be distinguished. For example (Fig. 5) in the first chart, that relates to Sauvignon grapes at a good maturation degree, the passage from the flower must to the crushing must occurs between the sixth and the seventh pressing (pressings A3), while first the flower must passage occurs. The data measured by means of the pH-metre were also confirmed by the traditional laboratory tests that evidenced as the adopted strategy allows to detect effectively, reiteratively and rapidly the passage from a pressing phase in which occurs the flower must extraction to a pressing phase in which occurs the crushing must extraction. For example intervention values of the order of about 0,05 - 0,3 can be considered.

Obviously according to the maturation degree of the grapes, of the grapes typology, of the soil from which they originate, etc. both the flower must starting initial pH and the crushing must final pH as well as the pressure at which begins the crushing must extraction may change. For example for a same typology of grapes from the same soil more mature grape will have a higher pH.

The applicant has valued as a possible parameter to identify the passage a pH variation with respect to the pH initial value detected at the beginning of the pressing.

It is necessary to notice, in fact, that the pH of the must, as previously explained, may change according to many factors, among which the grapes typology and their maturation degree. A detection of the passage from flower must to crushing must on the basis of a pH absolute value would be possible but would certainly involve an uncertainty degree that would lead to carry out prematurely the commutation of the valve with consequent poor efficiency of the process, such as to result hardly applicable. To obviate this disadvantage taking a grapes sample would be at least necessary and, by means of a specific analysis for example according to a prior art methodology, preliminarily determining the pH corresponding to flower must and the pH corresponding to crushing must. In fact the threshold values to identify this passage depend strongly on the typology and on the condition of the grapes, which can present a very variable initial pH, between pH 2.70 and pH 3.80, making practically impossible the use of an absolute type pH threshold. In any case, at least in theoretic line this possibility can be implemented, once set the parameters the machine will proceed automatically with the pressing steps programmed at raising pressures till when a pH value will be detected corresponding to the crushing must by means of the previously described pH sensor means (14). At this point the control device (11) will control the valve (10) to convey the must to the cistern of the crushing must (17). Already with an embodiment of this type the advantages achieved would be important, answering to a need very felt by the wine-growers. In fact with this method managing the pressing process following continuous withdrawals of samples and consequent laboratory analysis would be no more necessary. This allows to speed-up the pressing process without compromising the end product quality. Rather, the end product quality would even be improved because with the method of the prior art that provides the carrying out of measurements in laboratory it may happen the case in which the passage from flower must to crushing must occurs when the machine is operating, with the consequence that the passage is not detected on time and at least part of the crushing must is mixed with the flower must in the cistern of the flower must (16).

Applying the method according to the present invention the pressing times of the grapes charged into the pressing machine (23) can be reduced because the press will be able to autonomously set the sequence of operative pressures and automatically stop or deviate the crushing must, with a better quality level because the moment of passage from the flower must to the crushing must is identified more precisely.

Preferably, therefore, the method according to the present invention will provide an initial phase in which will be determined the pH reference value for the grape in process of treatment. Preferably the pH reference value will be calculated in an initial phase in which the absence of crushing must is certain. For instance this can be made when the press does not yet apply any pressure and the exit of the must occurs by free dejuicing, namely by the pressing of the grapes due to the same weight of the grapes placed in the press. Alternatively the pH reference value will be calculated in phases in which the pressure applied by the press is low with respect to the pressure at which the crushing must exit occurs.

The applicant has then also valued to correlate the on line and in real time measuring of the pH by the pH sensor means (14) with a measuring of the flow of extracted must carried out on line and in real time by means of the flow meter means (22), in particular by a litre-counter. This additional embodiment involves further benefits. Correlating with one another the two carried out measurements for example it is possible to use a particular initial period for determining the reference pH of the grapes in the working process, making the method independent on the other factors affecting the pH. Preferably, however, as previously said for determining the reference pH of the grapes it is either used the free dejuicing phase or a pressing phase at low-pressure. Only at the end of the free dejuicing phase or of a phase at low-pressure, will begin the evaluation of the data received for the determination of the moment of passage from flower must to crushing must. The analysis of the pH may, in this case, be made according to the litres extracted on the basis of the reference pH calculated on the previous phase. When the pH value measured in real time deviates from the calculated reference value of a certain predefined quantity, then one can be certain of the passage of the crushing must and can consequently operate the valve (10). It will be obvious that multiple other identification methodologies can be utilized without exiting from the domain of the present invention. For example one could first calculate the derivative on the values of pH and of sampled litres in successive moments for determining the slope of the curve and act according to the crossing of a certain increase slope. In fact the phenomenon of passage from flower must to crushing must can be considered fairly sudden because in correspondence of the crossing of the operative pressure that causes the crushing must extraction, one will have a crushing must extraction simultaneously from a lot of grapes of the charge. This can be seen enough evidently from the reported charts, both when they are referred to the pressing phases (Figs. 5, 6) and when are referred the extracted must litres (Fig. 7) and when they are referred to the time.

Further considerations on the benefits deriving from the application of the present invention derive from a particular case that often occurs, above all when one needs to press grapes of the same type but coming from different vineyards and eventually with different maturation degrees. The better solution, obviously, would be that of carrying out charges exclusively with grapes of the same type and from the same vineyard and with the same maturation degree. This ideal situation is however hardly obtainable if one considers that also for grapes of the same type from the same vineyard the maturation degree may be different according to the position of the grapes inside the vineyard, according to the plant, etc. In the habitual practice often happens that a charge is made with a certain type of grapes and prior to reaching the moment of passage to the crushing must the charge is increased with grapes of the same type from another vineyard. Another case is that of mixed charges already made in the initial phase.

In the case of following charges of grapes of the same type but with different characteristics there could be, therefore, variations of the pH not due as much to the reaching of the moment of passage from flower must to crushing must as rather to the passage from the must extracted from the grapes of the first charge to the must extracted from the grapes of the second charge. This can be a negative aspect both in the case in which the second charge is of grapes with higher pH, and in the case in which the second charge is of grapes with lower pH. In the first case there will be an increase of the pH that could be interpreted as a starting of presence of crushing must that in reality has not happened. In the second case there might be a lacking detection of the presence of crushing must in quick time. The applicant has valued this aspect and has valued that for keeping also this aspect into account, the preferred solution of the present invention will have to provide a calibrating initial phase that will be carried out in pressing phases previous to the phases in which it is provided that the passage from the flower must to the crushing must may happen. It is necessary to observe, in fact, that the maximum pressure below which cannot happen the passage from the flower must to the crushing must is known 'a priori' according to the grapes typology. Obviously the operator will be very attentive, as today already occurs, to carry out the possible second charge only in pressing phases that correspond to lower pressures, in absolute value, than those of passage from flower must to crushing must. The method according to the present invention may therefore provide, to solve this problem, a solution in which will be carried out an average of the pH values measured in real time and in continuous in the low-pressure pressing phase or free dejuicing phase only of the first charge and of the pH values measured in real time and in continuous in the low-pressure pressing phase or free dejuicing phase following the additional charge with the pressing remaining part of the first charge. In this way a pH mean value is established on the basis of which the intervention threshold is set to distinguish the moment of passage from flower must to crushing must. In this way the threshold value will keep into account that at the moment of the passage from flower must to crushing must a part of the variation of the pH can come from the fact that part of the crushing must will have a pH value corresponding to the pH of the crushing must of the first charge and part of the crushing must will have a pH value corresponding to the pH of the crushing must of the second charge.

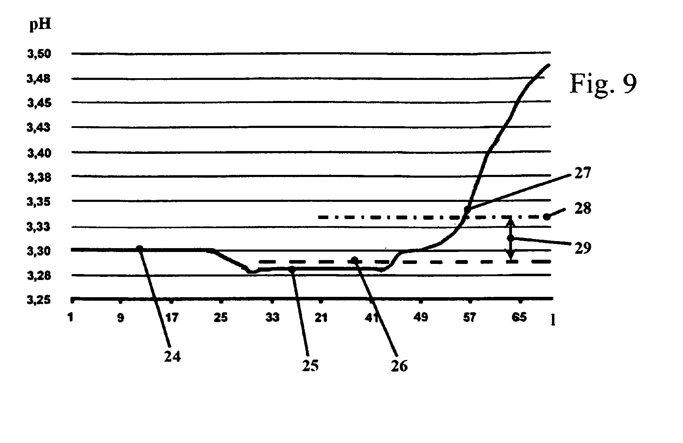

For example (Figs. 8, 9) a first charge of grapes (24) may have a different pH with respect to the pH of a second charge of grapes (25) that is introduced in the pressing machine following the first charge (24) before such a pressure is applied as from the first charge (24) starts the crushing must exit. The method according to the present invention provides the calculation of a mean pH (26) that will realize the reference value on whose basis the intervention threshold is set that causes the commutation of the valve (10) when a variation of pH (27) is detected.

For example (Fig. 8) a first charge of grapes (24) may have a lower pH with respect to the pH of a second charge of grapes (25). If one would not calculate the mean pH (26) and one would base the evaluation of the passage from the flower must to the crushing must on the basis of the initial pH one would run the risk to carry out the commutation of the valve (10) prematurely because part of the variation of pH (27) would be due in reality to the fact that the pH of the second charge is higher than the pH of the first charge. If one would not calculate the mean pH (26) and would base the evaluation of the passage from the flower must to the crushing must on the basis of the pH only of the second charge one would run the risk to carry out the commutation of the valve (10) too late because part of the variation of pH (27) would be masked in that the pH of the first charge is lower than the pH of the second charge. Instead by means of the calculation of the mean pH (26) and the setting of the intervention threshold on the basis of its value are kept into account the two different pH values of the first and of the second charge.

For example (Fig. 9) a first charge of grapes (24) could have a higher pH with respect to the pH of a second charge of grapes (25). If one would not calculate the mean pH (26) and one would base the evaluation of the passage from the flower must to the crushing must on the basis of the initial pH one would run the risk to carry out the commutation of the valve (10) too late because part of the variation of pH (27) would be concealed in that the pH of the second charge is lower than the pH of the first charge. If one would not calculate the mean pH (26) and one would base the evaluation of the passage from the flower must to the crushing must on the basis of the pH only of the second charge one would run the risk to carry out the commutation of the valve (10) prematurely because part of the variation of pH (27) would be due in reality to the fact that the pH of the first charge is higher than the pH of the second charge. Instead by means of the calculation of the mean pH (26) and the setting of the intervention threshold on the basis of its value are kept into account the two different pH values of the first and second charge.

In conclusion the present invention relates to an extraction and separation method of the must during the pressing of grapes (18) in a pressing machine (23) in a pressing process that occurs by means of the application of a pressure Pi on the grapes (18) intended for the extraction of the must (19) contained in it, in which there is provided the arrangement of a pH sensor means (14) downstream of the pressing machine (23) intended to carry out a real time on line measuring of the pH of the product extracted from the pressing (19), the extraction and separation method of the must involving the intervention on the pressing machine (23) and/or the deviation of the flow of the must (19) on the basis of the real time on line measuring of the pH of the product extracted from the pressing (19). Furthermore the moment in which said intervention on said pressing machine (23) and/or said deviation of the flow of said must (19) occurs can be identified by the crossing of an intervention threshold Si (28) by the pH value measured on line and in real time and/or by the crossing of an intervention threshold Si (28) by the slope of the curve representing the variation in the course of time of the pH value measured on line and in real time. The pressing can also occur without a sharp distinction in the pressing phases, for example by means of application of a single phase in which the pressure is progressively varied in the course of time according to the readings of the pH and if necessary to the extracted must litres. Furthermore the extraction and separation method of the must can provide the arrangement of a flow meter means (22) downstream of the pressing machine (23) intended to carry out a real time on line measuring of the quantity of extracted pressing product (19). In this case the extraction and separation method of the must will involve the intervention on the pressing machine (23) and/or the deviation of the flow of said must (19) on the basis of the real time on line measuring of the pH of the pressing product (19) and on the basis of the real time on line measuring of the quantity of extracted pressing product (19), possibly on the basis of the representative curve of the variation of the pH depending on the extracted litres. In the extraction and separation method of the must according to the present invention, moreover, the on line and in real time measuring of the pH of the must (19) extracted from the grapes (18) can occur according to the following phases:

i) on line and in real time measuring of the pH of the must (19) extracted from the grapes (18);
ii) calculation of a pH mean value (26) corresponding to an average of the pH value measured on line and in real time at least during a pressing period;

in which the intervention threshold Si (28) is calculated as the sum of an intervention value Vi (29) added to said mean pH value (26):

**[intervention threshold Si (28)] = [mean pH value (26)] + [intervention value Vi (29)].**

Furthermore the calculation of a mean pH value (26) can correspond to an average of the pH value measured on line and in real time at least in two pressing periods distinct in time. For example the two pressing periods can be pressing periods in which the pressing occurs following the addition of additional grapes (18) in the pressing machine (23), as previously explained.

In general, for a method that provides a sequence of pressing phases, the extraction and separation method of the must according to the present invention can occur according to a sequence of pressing phases A1, A2, ... Ai, ... Amax of the grapes. Each pressing phase Ai involves the application of a pressure Pi for a period of time Ti, the pressure Pi applied in a pressing phase Ai being different with respect to the pressure applied in a different pressing phase with respect to the pressing phase Ai, each pressing phase Ai being able to last for a period of time Ti different with respect to the period of time of a different pressing phase or alternatively each pressing phase Ai being able to have a duration Ti which is the same duration as all the other pressing phases and each pressing phase Ai being able to be repeated for more time cycles. The pressure Pi applied on the grapes is progressively raising during the course of time as an absolute value starting from an initial moment in which the pressing begins to a final moment when the pressing ends. The must (19) extracted during a certain number of initial pressing phases A1, A2, ..., Am is essentially all flower must (20). The must (19) extracted during a certain number of end pressing phases An, ..., Amax is essentially all crushing must (21). The passage from the extraction of flower must (20) to the extraction of crushing must (21) occurs in a pressing phase Ak which is an intermediate phase with respect to the pressing phases Am and An. The extraction and separation method of the must will include, therefore, the following steps:

a) application of a pressing phase A1 in which the grapes (18) are pressed at a pressure P1;
b) on line and in real time measuring of the pH of the must (19) which is extracted from the grapes (18) in the pressing phase A1;
c) application of following pressing phases Ai in which the grapes (18) are pressed at a pressure Pi;
d) on line and in real time measuring of the pH of the must (19) which is extracted from the grapes (18) in each pressing phase Ai.

The phase Ak in which the passage from the extraction of flower must (20) to the extraction of crushing must (21) occurs is identified by means of said on line measuring in real time of the pH of the product extracted from the pressing (19). The method can include a further phase e) in which the pressing phase Ak-1 is further applied at the pressure Pk-1 that is a pressure with value in module lower than the value in module of the pressure Pk applied in the phase Ak, the additional application of said pressing phase Ak-1 happening for a time $T_{lenghtening}$ corresponding to the complete extraction of the flower must.

The method can comprise a further phase (f) in which a commutation is performed of means of deviation (10) of the must (19) extracted from the grapes (18). The must (19) extracted in the pressing phases A1, ..., Ak-1 is deviated towards collection means of the flower must. The must (19) extracted in the pressing phases Ak, ..., Amax is deviated towards collection means of the crushing must.

The method according to the present invention can include a further phase (g) related to the identification of an improved pressing program. The identification of the improved pressing program can occur for example according to the following steps:

I) application of an initial pressing phase of an initial evaluation pressing program;
II) on line and in real time measuring of the pH of the must (19) extracted from the grapes (18);
III) calculation of a mean pH value (26) corresponding to an average of the pH value measured on line and in real time at least in an initial period of said evaluation pressing program;
IV) applying following pressing phases of said initial evaluation pressing program;
V) identification of the moment in which the passage occurs from flower must to crushing must establishing the particular phase in which the passage occurs from flower must to crushing must;
VI) variation of the corresponding pressing parameters to go back to a condition in which the extraction of flower must occurs with a pressing pressure reduction and with an increasing of the application time of the same;
VII) determination of said improved pressing program modifying the pressing phases of said initial evaluation pressing program of in relation to operative pressures and application time of at least one of the pressing phases which are previous phases with respect to the particular phase in which the passage occurs from flower must to crushing must.

Finally the present invention also relates to a pressing machine (23) for the pressing of agricultural products in particular grapes, fruits and similar products, comprising at least one pressing chamber in which the pressing machine (23) provides the arrangement of a pH sensor means (14) downstream with respect to the pressing machine (23). The pressing machine (23) possibly further providing the arrangement of a flow meter means (22) downstream with respect to the pressing machine (23). The pressing machine (23) will be then controlled by means of a control device (11) according to an extraction and separation method of the must as previously described. For example the pH sensor means (14) and the flow meter means (22) are mounted downstream with respect to said pressing machine (23) in an installation position selected among the following:

- within an accumulation plenum chamber (2) inside of which the must (19) is conveyed picked by the collection channel (5) of said pressing machine (23), below the minimum level of the must (19) present in the same accumulation plenum chamber;
- within a first duct (4) or feeding duct from the press through which the must obtained by pressing is conveyed towards said accumulation plenum chamber (2);
- within a third duct (7) or feeding duct from the accumulation plenum chamber (2), said third duct (7) being intended for the drawing of the must from said accumulation plenum chamber (2) to feed it in one or more cisterns of the extracted must (16, 17);
- within a second duct (6) intended to convey of the must picked in a collecting basin (3).

The description of the present invention has been made with reference to the figures enclosed in a form of preferred execution of the same, but it is evident that many possible alterations, changing and variants will be immediately clear to those skilled in the art of the sector in view of the previous description. So, it should be stressed that the invention is not limited by the previous description, but it contains all alterations, changing and variants in accordance with the appended claims.

Used nomenclature

With reference to the identification numbers reported in the enclosed figures, the following nomenclature has been used:

1. Press
2. Accumulation plenum chamber
3. Collecting basin
4. First duct or feeding duct from the press
5. Collection channel
6. Second duct or feeding duct from the collecting basin
7. Third duct or feeding duct from the accumulation plenum chamber
8. Fourth duct or feeding duct of the flower must
9. Fifth duct or feeding duct of the crushing must
10. Valve
11. Control device
12. Level first sensor
13. Level second sensor
14. pH sensor means
15. pH-metre
16. Cistern of the flower must
17. Cistern of the crushing must
18. Grapes
19. Must or product extracted from the pressing
20. Flower must
21. Crushing must
22. Flow meter means
23. Pressing machine
24. First charge
25. Second charge
26. Mean pH
27. Variation of pH
28. Intervention threshold
29. Intervention value
30. Membrane

**Claims**

1. Extraction and separation method of the must during the pressing of grapes (18) in a pressing machine (23) in a pressing process which occurs by means of the application of a pressure Pi on the grapes (18) intended for the extraction of the must (19) contained in it, **characterised in that** pH sensor means (14) are provided to be arranged downstream with respect to said pressing machine (23) intended to carry out a real time on line measuring of the pH of the product extracted from the pressing (19), said extraction and separation method of the must involving the intervention on said pressing machine (23) and/or the deviation of the flow of said must (19) on the basis of said real time on line measuring of the pH of the product extracted from the pressing (19).

2. Extraction and separation method of the must during the pressing of grapes (18) according to the previous claim **characterised in that** the moment in which said intervention on said pressing machine (23) and/or said deviation of the flow of said must (19) occurs is identified by the crossing of an intervention threshold Si (28) by the pH value which is measured in real time on line and/or by the crossing of an intervention threshold Si (28) by the slope of the curve representing the variation in the course of time of said pH value which is measured in real time on line.

3. Extraction and separation method of the must during the pressing of grapes (18) according to any of the previous claims **characterised in that** flow meter means (22) are provided to be arranged downstream with respect to said pressing machine (23) intended to carry out a real time on line measuring of the quantity of product extracted from the pressing (19), said extraction and separation method of the must involving the intervention on said pressing machine (23) and/or the deviation of the flow of said must (19) on the basis of said real time on line measuring of the pH of the product extracted from the pressing (19) and on the basis of said real time on line measuring of the quantity of product extracted from the pressing (19), possibly on the basis of the representative curve of the variation of the pH depending on the measured extracted quantity.

4. Extraction and separation method of the must during the pressing of grapes (18) according to any of the previous claims 2 to 3 **characterised in that** said real time on line measuring of the pH of the must (19) which is extracted from the grapes (18) occurs according to the following phases:

   i) real time on line measuring of the pH of the must (19) which is extracted from the grapes (18);
   ii) calculation of a mean pH value (26) corresponding to an average of the pH value which is measured on line and in real time at least during a pressing period;

   in which said intervention threshold Si (28) is calculated as the sum of an intervention value Vi (29) which is added to said mean pH value (26):

   [intervention threshold Si (28)] = [mean pH value (26)] + [intervention value Vi (29)].

5. Extraction and separation method of the must during the pressing of grapes (18) according to the previous claim **characterised in that** said calculation of said mean pH value (26) corresponds to an average of the pH value which is measured on line and in real time at least in two pressing periods which are distinct in time, said at least two pressing periods being pressing periods in which the pressing occurs following the addition of additional grapes (18) into said pressing machine (23).

6. Extraction and separation method of the must during the pressing of grapes (18) according to any of the previous claims **characterised in that** said pressing process occurs according to a sequence of pressing phases A1, A2, ... Ai, ... Amax of the grapes, each pressing phase involving the application of a pressure Pi for a period of time Ti, the pressure Pi applied during a pressing phase Ai being different with respect to the pressure which is applied in a different pressing phase with respect to the pressing phase Ai, each pressing phase Ai being able to last for a period of time Ti which is different with respect to the period of time of a different pressing phase or alternatively each pressing phase Ai being able to have a duration Ti which is the same duration as all the other pressing phases and each pressing phase Ai being able to be repeated for more time cycles, the pressure Pi which is applied on the grapes being progressively raising during the course of time as an absolute value starting from an initial moment in which the pressing begins up to a final moment in which the pressing ends, the must (19) which is extracted during a certain number of initial pressing phases A1, A2, ..., Am essentially being all flower must (20) [must by light pressing], the must (19) which is extracted during a certain number of end pressing phases An, ..., Amax essentially being all crushing must (21) ["torchiatura" must], the passage from the extraction of flower must (20) to the extraction of crushing must (21) occurring in a pressing phase Ak which is an intermediate phase with respect to said pressing phases Am and An, said extraction and separation method of the must including the following steps:

a) application of a pressing phase A1 in which the grapes (18) are pressed at a pressure P1;
b) real time on line measuring of the pH of the must (19) which is extracted from the grapes (18) in the pressing phase A1;
c) application of following pressing phases Ai in which the grapes (18) are pressed at a pressure Pi;
d) real time on line measuring of the pH of the must (19) which is extracted from the grapes (18) in each of the pressing phases Ai;

in which said phase Ak in which the passage from the extraction of flower must (20) to the extraction of crushing must (21) occurs is identified by means of said real time on line measuring of the pH of the product extracted from the pressing (19).

7. Extraction and separation method of the must during the pressing of grapes (18) according to the previous claim **characterised in that** it includes a further phase e) in which the pressing phase Ak-1 at the pressure Pk-1 is further applied, which is a pressure having an absolute module value which is lower than the absolute module value of the pressure Pk which is applied in said phase Ak, said additional application of said pressing phase Ak-1 occurring for a period of time $T_{lengthening}$ corresponding to the complete extraction of the flower must.

8. Extraction and separation method of the must during the pressing of grapes (18) according to any of the previous claims 6 to 7 **characterised in that** it includes a further phase (f) in which a commutation is performed of means of deviation (10) of the must (19) which is extracted from the grapes (18), the must (19) which is extract in the pressing phases A1,..., Ak-1 being deviated towards collection means of the flower must, the must (19) which is extracted in the pressing phases Ak, ...., Amax being deviated towards collection means of the crushing must.

9. Extraction and separation method of the must during the pressing of grapes (18) according to any of the previous claims 1 to 8 **characterised in that** it includes a further phase (g) relative to the identification of an improved pressing program, said identification of said improved pressing program occurring according to the following steps:

I) application of an initial pressing phase of an initial evaluation pressing program;
II) real time on line measuring of the Ph of the must (19) which is extracted from the grapes (18);
III) calculation of a mean pH value (26) corresponding to an average of the pH value which is measured on line and in real time at least in an initial period of said evaluation pressing program;
IV) applying following pressing phases of said initial evaluation pressing program;
V) identification of the moment in which the passage occurs from flower must to crushing must establishing the particular phase in which the passage occurs from flower must to crushing must;
VI) variation of the corresponding pressing parameters to go back to a condition in which the extraction of flower must occurs with a pressing pressure reduction and with an increasing of the application time of the same;
VII) determination of said improved pressing program modifying the pressing phases of said initial evaluation pressing program relatively to operative pressures and application time of at least one of the pressing phases which are previous phases with respect to the particular phase in which the passage occurs from flower must to crushing must.

10. Pressing machine (23) to press agricultural products, in particular grapes, fruits and similar products, comprising at least one pressing chamber intended to press **characterised in that** said pressing machine (23) is provided to be arranged with said pH sensor means (14) downstream with respect to said pressing machine (23), said pressing machine (23) possibly being provided to be arranged with said flow meter means (22) downstream with respect to said pressing machine (23), said pressing machine (23) being controlled by means of a control device (11) according to an extraction and separation method of the must according to any of the previous claims 1 to 9.

11. Pressing machine (23) to press agricultural products according to the previous claim **characterised in that** said pH sensor means (14) and/or said flow meter means (22) are mounted downstream with respect to said pressing machine (23) in an installation position selected among the following ones:

- within an accumulation plenum chamber (2) inside of which the must (19) is conveyed which is picked by a collection channel (5) of said pressing machine (23), in an installation position which is located below the minimum level of the must (19) which is present in the accumulation plenum chamber;
- within a first duct (4) or feeding duct from the press through which the must obtained by pressing is conveyed towards said accumulation plenum chamber (2);
- within a third duct (7) or feeding duct from the accumulation plenum chamber (2), said third duct (7) being intended for the drawing of the must from said accumulation plenum chamber (2) to feed it in one or more cisterns (16, 17) of the extracted must;
- within a second duct (6) intended to convey the must picked in a collecting basin (3).

**Patentansprüche**

1. Verfahren zum Entsaften und Trennen von Maische während des Pressens von Trauben (18) in einer Pressmaschine (23) in einem Pressverfahren, das durch die Anbringung eines Druckes Pi auf die Trauben (18) erfolgt, zum Auspressen des darin enthaltenen Mostes (19), **gekennzeichnet dadurch, dass** PH-Sensoren (14) vorgesehen sind, der Pressmaschine (23) nachgeschaltet, zwecks einer Echtzeit-Online-Messung des pH-Werts des ausgepressten Produkts (19), wobei das Verfahren zum Entsaften und Trennen von Maische besagte Pressmaschine (23) benutzt, und/oder die Umleitung des Stroms des Mostes (19) auf Grundlage von besagter Echtzeit-Online-Messung des pH-Werts des ausgepressten Produkts (19).

2. Verfahren zum Entsaften und Trennen von Maische während des Pressens von Trauben (18) nach dem vorherigen Anspruch, **gekennzeichnet dadurch dass** der Moment des Eingriffs auf besagter Pressmaschine (23) und/oder der Umleitung des Stroms des Mostes (19) durch das Überschreitung einer Eingriffsschwelle Si (28) durch den PH-Wert identifiziert wird, der in Echtzeit online gemessen wird, und/oder durch die Überschreitung einer Eingriffsschwelle Si (28) durch die Schräge der Kurve, die die Veränderung im Lauf der Zeit des PH-Werts darstellt, der in Echtzeit online gemessen wird.

3. Verfahren zum Entsaften und Trennen von Maische während des Pressens von Trauben (18) nach einem beliebigen der vorherigen Patentansprüche, **gekennzeichnet dadurch, dass** Strömungsmesser (22) der Pressmaschine (23) nachgeschaltet sind, um eine Echtzeit-Online-Messung der Menge des ausgepressten Produkts (19) durchzuführen, wobei das Verfahren zum Entsaften und Trennen von Maische den Eingriff auf der Pressmaschine (23) umfasst und/oder die Umleitung des Stroms des Mostes (19) auf Grundlage der Echtzeit-Online-Messung des pH-Werts des ausgepressten Produkts (19) und auf Grundlage der Echtzeit-Online-Messung der Menge des ausgepressten Produkts, (19), möglicherweise auf Grundlage der repräsentativen Kurve der Veränderung des pH-Werts je nach der gemessenen ausgepressten Menge.

4. Verfahren zum Entsaften und Trennen von Maische während des Pressens von Trauben (18) nach einem beliebigen der vorherigen Patentansprüche 2 bis 3, **gekennzeichnet dadurch, dass** besagte Echtzeit-Online-Messung des pH-Werts des Mostes (19), der aus den Trauben (18) herausgepresst wird, die folgenden Phasen umfasst:

   i) Echtzeit-Online-Messung des pH-Werts des Mostes (19), der aus den Trauben herausgepresst wird (18);
   ii) Berechnung eines mittleren pH-Werts (26) entsprechend einem Durchschnitt des pH-Werts, der online und in Echtzeit mindestens während einer Pressphase gemessen wird;

   wobei die Eingriffschwelle Si (28) berechnet wird als die Summe eines Eingriffswerts Vi (29), die zu besagtem mittlerem pH-Wert (26) addiert wird:

$$[\text{Eingriffsschwelle Si (28)}] = [\text{mittlerer PH-Wert (26)}] + [\text{Eingriffswert Vi (29)}].$$

5. Verfahren zum Entsaften und Trennen von Maische während des Pressens von Trauben (18) nach dem vorherigen Anspruch, **gekennzeichnet dadurch, dass** besagte Berechnung des mittleren PH-Werts (26) einem Durchschnitt des pH-Werts entspricht, der online und in Echtzeit mindestens in zwei Pressphasen gemessen wird, die zeitlich verschieden sind, wobei dies Pressphasen sind, in denen das Pressen nach der Zugabe von zusätzlichen Trauben (18) in die Pressmaschine (23) erfolgt.

6. Verfahren zum Entsaften und Trennen von Maische während des Pressens von Trauben (18) nach einem beliebigen der vorherigen Patentansprüche, **gekennzeichnet dadurch, dass** besagtes Pressverfahren entsprechend einer Sequenz von Pressphasen A1, A2, ... Ai, ... Amax der Trauben erfolgt, wobei jede Pressphase die Aufbringung eines Druckes Pi über eine Zeitspanne Ti umfasst, wobei der Druck Pi während einer Pressphase Ai von dem Druck verschieden ist, der in einer anderen Pressphase als Ai aufgebracht wird, wobei jede Pressphase Ai eine Zeitspanne Ti lang dauern kann, die von der Zeitspanne einer anderen Pressphase verschieden ist oder alternativ jede Pressphase Ai eine Dauer Ti haben kann, die dieselbe Dauer wie alle anderen Pressphasen hat, und jede Pressphase Ai für mehrere Zeitzyklen wiederholt werden kann,

wobei der Druck Pi auf die Trauben fortschreitend im Verlauf der Zeit zunimmt, als ein Absolutwert ausgehend von einem Anfangsmoment, in dem das Pressen beginnt, bis zu einem Endmoment, in dem das Pressen endet, wobei der Most (19), der während einer gewissen Zahl von anfänglichen Pressphasen A1, A2, ..., Am erhalten wird, im wesentlichen nur Auslesemost (20) ist [Most durch leichtes Pressen], während der Most (19), der während einer gewissen Zahl von Endpressphasen An, ..., Amax erhalten wird, im wesentlichen nur Keltermost (21) ["torchiatura"-Most] ist, wobei der Übergang von der Auslesemostextraktion (20) zu der Keltermostextraktion (21) in einer Pressphase Ak erfolgt, die ein Zwischenstadium in bezug auf besagte Pressphasen Am und An ist, wobei das Verfahren zum Entsaften und Trennen von Maische die folgenden Phasen umfasst:

a) Pressphase A1, in der die Trauben (18) mit einem Druck P1 gepresst werden;
b) Echtzeit-Online-Messung des pH-Werts des Mostes (19), der in der Pressphase A1 aus den Trauben (18) herausgepresst wird,
c) Pressphasen Ai, in denen die Trauben (18) mit einem Druck Pi gepresst werden;
d) Echtzeit-Online-Messung des pH-Werts des Mostes (19), der in jeder der Pressphasen Ai aus den Trauben (18) herausgepresst wird;

wobei die Phase Ak, in der der Übergang von der Auslesemostextraktion (20) zu der Keltermostextraktion (21) erfolgt mittels besagter Echtzeit-Online-Messung des pH-Werts des ausgepressten Produkts (19) identifiziert wird.

7. Verfahren zum Entsaften und Trennen von Maische während des Pressens von Trauben (18) nach dem vorherigen Anspruch, **gekennzeichnet dadurch, dass** es eine weitere Phase e) umfasst in der die Pressphase Ak-1 bei dem Druck Pk-1 weiter angewandt wird, der ein Druck mit einem absoluten Modulwert ist, der niedriger als der absolute Modulwert des Druckes Pk ist, der in besagter Phase Ak aufgebracht wird, wobei besagte zusätzliche Anwendung der Pressphase Ak-1 über eine Zeitspanne $T_{verlängerung}$ erfolgt, die dem vollständigen Herausziehen des Auslesemosts entspricht.

8. Verfahren zum Entsaften und Trennen von Maische während des Pressens von Trauben (18) nach einem beliebigen der vorherigen Patentansprüche 6 bis 7, **gekennzeichnet dadurch, dass** es eine weitere Phase (f) umfasst, in der eine Kommutation von Umlenkmitteln (10) des Mostes (19) ausgeführt wird, der aus den Trauben (18) herausgepresst wird, so dass der Most (19), der in den Pressphasen A1, ..., Ak-1 herausgepresst wird. zu Sammelmitteln des Auslesemosts umgelenkt wird und der Most (19), der in den Pressphasen Ak, ..., Amax herausgepresst wird, zu Sammelmitteln des Keltermosts umgelenkt wird.

9. Verfahren zum Entsaften und Trennen von Maische während des Pressens von Trauben (18) nach einem beliebigen der vorherigen Patentansprüche 1 bis 8, **gekennzeichnet dadurch, dass** es eine weitere Phase (g) zur Identifizierung eines verbesserten Pressprogramm umfasst, wobei die Identifizierung des verbesserten Pressprogramms mit folgenden Phasen erfolgt:

I) Anfängliche Pressphase eines Pressprogramms zur anfänglichen Bewertung;
II) Echtzeit-Online-Messung des pH-Werts des Mostes (19), der aus den Trauben herausgepresst wird (18);
III) Berechnung eines mittleren pH-Werts (26) entsprechend einem Durchschnitt des pH-Werts, der online und in Echtzeit mindestens in einer anfänglichen Zeit des Bewertungspressprogramms gemessen wird;
IV) folgende Pressphasen des Pressprogramms zur anfänglichen Bewertung;
V) Identifizierung des Moments, in dem der Übergang von Auslesemost zu Keltermost erfolgt, mit Festlegung der besonderen Phase, in der der Übergang von Auslesemost zu Keltermost erfolgt;
VI) Veränderung der entsprechenden Pressparameter, um zu einem Zustand zurückzukehren, in dem die Auslesemostextraktion mit einer Reduzierung des Pressdrucks erfolgt und mit einer Zunahme von dessen Aufbringungszeit;
VII) Ermittlung des verbesserten Pressprogramms durch Veränderung der Pressphasen des anfänglichen Bewertungspressprogramms, was Drücke und Aufbringungszeit mindestens einer der Pressphasen betrifft, die vor der besonderen Phase liegen, in der der Übergang von Auslesemost zu Keltermost erfolgt.

10. Pressmaschine (23) zum Pressen landwirtschaftlicher Produkte, insbesondere Trauben, Früchte und ähnlicher Produkte, mit mindestens einer Presskammer zum Pressen, **gekennzeichnet dadurch, dass** besagte Pressmaschine (23) mit besagtem PH-Sensor ausgestattet ist (14), der besagter Pressmaschine (23) nachgeschaltet ist, wobei die Pressmaschine, (23) möglicherweise mit besagtem Strömungsmesser (22) versehen ist, der besagter Pressmaschine (23) nachgeschaltet ist, wobei die Pressmaschine (23) mittels einer Steuervorrichtung (11) kontrolliert wird, entsprechend einem Verfahren zum Entsaften und Trennen von Maische nach einem beliebigen der vorherigen Patentansprüche 1 bis 9.

11. Pressmaschine (23) zum Pressen landwirtschaftlicher Produkte nach dem vorherigen Anspruch, **gekennzeichnet dadurch, dass** besagte PH-Sensoren (14) und/oder Strömungsmesser (22) der Pressmaschine (23) nachgeschaltet sind, in einer der folgenden Installationspositionen:

- in einer Sammelkammer (2), in die der Most (19) durch einen Sammelkanal (5) der Pressmaschine (23), befördert wird, unterhalb der Mindesthöhe des Mostes (19) in der Sammelkammer;
- in einer ersten Leitung (4) oder Zuführleitung von der Presse her, durch die der herausgepresste Most zur Sammelkammer (2) befördert wird;
- in einer dritten Leitung (7) oder Zuführleitung von der Sammelkammer (2) her, die zur Entnahme des Mostes von der Sammelkammer (2) dient, um ihn in eine oder mehrere Zisternen (16,17) für den herausgepressten Most einzuführen;
- in einer zweiten Leitung (6), die den gesammelten Most in ein Sammelbecken (3) befördert.

## Revendications

1. Procédé pour l'extraction et la séparation du moût pendant le pressurage du raisin (18) dans une machine de pressurage (23) dans un procédé de pressurage qui se fait au moyen de l'application d'une pression Pi sur le raisin (18) pour l'extraction du moût (19), **caractérisé en ce que** des capteurs de pH (14) sont disposés en aval par rapport à ladite machine de pressurage (23) pour mesurer en ligne en temps réel le pH du produit extrait du pressurage (19), ledit procédé pour l'extraction et la séparation du moût impliquant l'intervention sur ladite machine de pressurage (23) et/ou la déviation du flux dudit moût (19) à partir de ladite mesure en ligne en temps réel du pH du produit extrait du pressurage (19).

2. Procédé pour l'extraction et la séparation du moût pendant le pressurage du raisin (18) conformément à la revendication précédente, **caractérisé en ce que** le moment où ladite intervention sur ladite machine de pressurage (23) et/ou ladite déviation du flux dudit moût (19) a lieu, est identifié par le dépassement d'un seuil d'intervention Si (28) par la valeur de pH qui est mesurée en temps réel en ligne et/ou par le dépassement d'un seuil d'intervention Si (28) par l'inclinaison de la courbe qui représente la variation au cours du temps de ladite valeur de pH qui est mesurée en temps réel en ligne.

3. Procédé pour l'extraction et la séparation du moût pendant le pressurage du raisin (18) selon l'une quelconque des revendications précédentes, **caractérisé en ce que** des débitmètres (22) sont disposés en aval par rapport à ladite machine de pressurage (23) destinés à mesurer en ligne en temps réel la quantité du produit extrait du pressurage (19), ledit procédé pour l'extraction et la séparation du moût impliquant l'intervention sur ladite machine de pressurage (23) et/ou la déviation du flux dudit moût (19) à partir de ladite mesure en ligne en temps réel du pH du produit extrait du pressurage (19) et à partir de ladite mesure en ligne en temps réel de la quantité du produit extrait du pressurage, (19), possiblement à partir de la courbe qui représente la variation du pH selon la quantité extraite mesurée.

4. Procédé pour l'extraction et la séparation du moût pendant le pressurage du raisin (18) selon l'une quelconque des revendications précédentes 2 à 3, **caractérisé en ce que** ladite mesure en ligne en temps réel du pH du moût (19) qui est extrait du raisin (18) a lieu selon les phases suivantes :

i) mesure en ligne en temps réel du pH du moût (19) qui est extrait du raisin (18);
ii) calcul d'une valeur moyenne de pH (26) qui correspond à une moyenne de la valeur de pH qui est mesurée en ligne et en temps réel au moins pendant une période de pressurage ;

où ledit seuil d'intervention Si (28) est calculé comme la somme d'une valeur d'intervention Vi (29) qui est ajoutée à ladite valeur moyenne de pH (26):

$$[\text{seuil d'intervention Si (28)}] = [\text{valeur moyenne de pH (26)}] + [\text{valeur d'intervention Vi (29)}].$$

**5.** Procédé pour l'extraction et la séparation du moût pendant le pressurage du raisin (18) selon la revendication précédente, **caractérisé en ce que** ledit calcul de ladite valeur moyenne de pH (26) correspond à une moyenne de la valeur de pH qui est mesurée en ligne et en temps réel au moins dans deux périodes de pressurage qui sont séparées dans le temps, ces deux périodes de pressurage étant des périodes de pressurage où le pressurage a lieu après l'addition de raisin supplémentaire (18) dans ladite machine de pressurage (23).

**6.** Procédé pour l'extraction et la séparation du moût pendant le pressurage du raisin (18) selon l'une quelconque des revendications précédentes, **caractérisé en ce que** ledit procédé de pressurage a lieu conformément à une séquence de phases de pressurage A1, A2, ... Ai, ... Amax du raisin, chaque phase de pressurage impliquant l'application d'une pression Pi pendant une période du temps Ti, la pression Pi appliquée pendant une phase de pressurage Ai étant différente par rapport à la pression qui est appliquée dans une phase de pressurage différente par rapport à la phase de pressurage Ai, chaque phase de pressurage Ai pouvant durer une période de temps Ti, qui est différente par rapport à la période de temps d'une phase de pressurage différente, ou alternativement chaque phase de pressurage Ai peut avoir une durée Ti qui est la même durée que toutes les autres phases de pressurage et chaque phase de pressurage Ai peut être répétée pour plusieurs cycles de temps, la pression Pi qui est appliquée sur le raisin augmentant progressivement pendant le cours du temps comme une valeur absolue en commençant par un moment initial où le pressurage commence, jusqu'à un moment final où le pressurage finit, le moût (19) qui est extrait pendant un certain nombre de phases de pressurage initiales A1, A2, ..., Am étant essentiellement tout du moût issu de pressurage doux (20), le moût (19) qui est extrait pendant un certain nombre de phases de pressurage finales An, ..., Amax étant essentiellement tout du moût de pressurage (21), le passage de l'extraction du moût issu de pressurage doux (20) à l'extraction du moût de pressurage (21) ayant lieu dans une phase de pressurage Ak qui est une phase intermédiaire par rapport auxdites phases de pressurage Am et An, ledit procédé pour l'extraction et la séparation du moût comprenant les étapes suivantes :

a) application d'une phase de pressurage A1 dans laquelle le raisin (18) est pressé avec une pression P1 ;
b) mesure en ligne en temps réel du pH du moût (19) qui est extrait du raisin (18) dans la phase de pressurage A1 ;
c) application de phases de pressurage suivantes Ai dans lesquelles le raisin (18) est pressé avec une pression Pi ;
d) mesure en ligne en temps réel du pH du moût (19) qui est extrait du raisin (18) dans chacune des phases de pressurage Ai ;

où ladite phase Ak dans laquelle le passage de l'extraction du moût issu de pressurage doux (20) à l'extraction du moût de pressurage (21) a lieu, est identifiée au moyen de ladite mesure en ligne en temps réel du pH du produit extrait du pressurage (19).

**7.** Procédé pour l'extraction et la séparation du moût pendant le pressurage du raisin (18) selon la revendication précédente, **caractérisé en ce qu'**il inclut une ultérieure phase e) où la phase de pressurage Ak-1 avec la pression Pk-1 est ultérieurement appliquée, qui est une pression ayant une valeur de module absolue qui est inférieure à la valseur de module absolue de pression Pk qui est appliquée dans ladite phase Ak, ladite application additionnelle de ladite phase de pressurage Ak-1 ayant lieu pendant une période du temps $T_{allongement}$ qui correspond à l'extraction complète du moût issu de pressurage doux.

**8.** Procédé pour l'extraction et la séparation du moût pendant le pressurage du raisin (18) selon l'une quelconque des revendications précédentes 6 à 7 **caractérisé en ce qu'**il inclut une ultérieure phase (f) où il y a une commutation des moyens de déviation (10) du moût (19) qui est extrait du raisin (18), le moût (19) qui est extrait dans les phases de pressurage, A1, ..., Ak-1 étant dévié vers des moyens de récolte du moût issu de pressurage doux, le moût (19) qui est extrait dans les phases de pressurage Ak, ..., Amax étant dévié vers des moyens de récolte du moût de pressurage.

**9.** Procédé pour l'extraction et la séparation du moût pendant le pressurage du raisin (18) selon l'une quelconque des revendications précédentes 1 à 8, **caractérisé en ce qu'**il inclut une ultérieure phase (g) concernant l'identification d'un programme de pressurage amélioré, ladite identification dudit programme de pressurage amélioré comprenant les étapes suivantes :

I) application d'une phase de pressurage initiale d'un programme de pressurage d'évaluation initiale ;

II) mesure en ligne en temps réel du Ph du moût (19) qui est extrait du raisin (18);

III) calcul d'une valeur de pH moyen (26) qui correspond à une moyenne de la valeur de pH qui est mesurée en ligne et en temps réel au moins dans une période initiale dudit programme de pressurage d'évaluation ;

IV) phases de pressurage suivantes dudit programme de pressurage d'évaluation initiale ;

V) identification du moment où le passage du moût issu de pressurage doux au moût de pressurage a lieu pour établir la phase particulière dans laquelle le passage du moût issu de pressurage doux au moût de pressurage a lieu ;

VI) variation des paramètres de pressurage correspondants pour retourner à une condition où l'extraction du moût issu de pressurage doux se fait avec une réduction de la pression de pressurage et avec une augmentation du temps de son application ;

VII) détermination dudit programme de pressurage amélioré en modifiant les phases de pressurage dudit programme de pressurage d'évaluation initiale relativement aux pressions et temps d'application d'au moins une des phases de pressurage qui sont des phases précédentes par rapport à la phase particulière où le passage du moût issu de pressurage doux au moût de pressurage a lieu.

**10.** Machine de pressurage (23) pour presser des produits agricoles, en particulier le raisin, des fruits et produits similaires, comprenant au moins une chambre de pressurage destiné à presser, **caractérisée en ce que** ladite machine de pressurage (23) est disposée avec ledit capteur de pH (14) en aval par rapport à ladite machine de pressurage (23), ladite machine de pressurage (23) étant possiblement disposé avec ledit débitmètre (22) en aval par rapport à ladite machine de pressurage, (23), ladite machine de pressurage (23) étant contrôlée au moyen d'un dispositif de contrôle (11) conformément à un procédé pour l'extraction et la séparation du moût selon l'une quelconque des revendications précédentes 1 à 9.

**11.** Machine de pressurage (23) pour presser des produits agricoles conformément à la revendication précédente, **caractérisée en ce que** ledit capteur de pH (14) et/ou ledit débitmètre (22) sont montés en aval par rapport à ladite machine de pressurage (23) dans une position d'installation sélectionnée parmi les suivantes :

- dans une chambre d'accumulation (2) dans laquelle le moût (19) est transporté par un canal de récolte (5) de ladite machine de pressurage (23), dans une position d'installation qui est située au-dessous du niveau minimal du moût (19) qui est présent dans la chambre d'accumulation ;
- dans un premier tuyau (4) ou tuyau d'alimentation de la presse à travers lequel le moût obtenu par pressurage est transporté vers ladite chambre d'accumulation (2) ;
- dans un troisième tuyau (7) ou tuyau d'alimentation de la chambre d'accumulation (2), ledit troisième tuyau (7) étant destiné à prélever le moût de ladite chambre d'accumulation (2) pour l'introduire dans une ou plusieurs citernes (16, 17) du moût extrait ;
- dans un deuxième tuyau (6) destiné à transporter le moût dans un bassin de récolte (3).

Fig. 1

Fig. 2

Fig. 3

Fig. 4

Fig. 5

Fig. 6

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4253390 A

- DE 19924475

**Non-patent literature cited in the description**

- **PATEL P ; HERBST-JOHNSTONE M ; LEE SA ; GARDNER RC ; WEAVER R ; NICOLAU L ; KIL-MARTIN PA.** Influence of juice pressing conditions on polyphenols, antioxidants, and varietal aroma of Sauvignon blanc microferments. *Journal of Agricultural and Food Chemistry,* 23 June 2010, vol. 58 (12), 7280-8